(19) Europäisches Patentamt
European Patent Office
Office européen des brevets

(11) **EP 4 333 128 A1**

(12) **EUROPEAN PATENT APPLICATION**
published in accordance with Art. 153(4) EPC

(43) Date of publication:
**06.03.2024 Bulletin 2024/10**

(51) International Patent Classification (IPC):
***H01M 4/64*** (2006.01)        ***H01M 4/134*** (2010.01)

(21) Application number: **22815219.5**

(52) Cooperative Patent Classification (CPC):
**H01M 4/13; H01M 4/134; H01M 4/139; H01M 4/64; H01M 4/66; H01M 4/80; H01M 10/052;** Y02E 60/10

(22) Date of filing: **30.05.2022**

(86) International application number:
**PCT/CN2022/095943**

(87) International publication number:
**WO 2022/253174 (08.12.2022 Gazette 2022/49)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **01.06.2021 CN 202110610629**

(71) Applicant: **BYD Company Limited**
**Shenzhen, Guangdong 518118 (CN)**

(72) Inventors:
• **PAN, Yi**
**Shenzhen, Guangdong 518118 (CN)**
• **XIE, Jing**
**Shenzhen, Guangdong 518118 (CN)**
• **GUO, Zizhu**
**Shenzhen, Guangdong 518118 (CN)**
• **SUN, Huajun**
**Shenzhen, Guangdong 518118 (CN)**

(74) Representative: **Arnold & Siedsma**
**Bezuidenhoutseweg 57**
**2594 AC The Hague (NL)**

(54) **CURRENT COLLECTOR AND PREPARATION METHOD THEREFOR, NEGATIVE ELECTRODE, AND ELECTROCHEMICAL ENERGY STORAGE DEVICE**

(57) The present disclosure provides a current collector, a preparation method for a current collector, a negative electrode, and an electrochemical energy storage device. The current collector includes: a first polymer layer; a metal layer, the metal layer being disposed on a side of the first polymer layer; and a second polymer layer, the second polymer layer being disposed on a side of the metal layer facing away from the first polymer layer; and in a direction from the first polymer layer to the second polymer layer, the current collector having a number of through-holes that penetrate the current collector.

FIG. 2

**Description**

FIELD

The present disclosure relates to the field of energy storage technologies, and more specifically, to a current collector, a preparation method therefor, a negative electrode, and an electrochemical energy storage device.

BACKGROUND

Lithium batteries are characterized by high energy density, good cycle stability, safety, and the like, and are widely used in a number of fields such as mobile phones, computers, automobiles, and grid energy storage. A lithium foil used for a lithium metal battery brings high costs and a potential safety trouble in a battery manufacture process. Therefore, there is an inspiration that only a current collector is used as a negative electrode material, that is, a lithium metal battery made of theoretically zero-excess lithium has higher energy density theoretically. However, during actual use, lithium is deposited non-uniformly on the current collector, and generated dead lithium leads to low cycle life, and further generates severe lithium crystal dendrite to bring a potential safety trouble. As a result, use performance of the lithium battery is affected, and application of the lithium battery is limited.

SUMMARY

The present disclosure discloses a current collector, to alleviate and even resolve the foregoing problem of non-uniform lithium deposition, avoid generation of lithium crystal dendrite, and improve its use performance.

According to a first aspect, the present disclosure provides a current collector. The current collector includes a first polymer layer, a metal layer, and a second polymer layer laminated sequentially, the current collector has with a number of through-holes that penetrate two opposite surfaces of the current collector in a lamination direction.

The present disclosure provides a current collector, including: a first polymer layer; a metal layer, the metal layer being located on a side of the first polymer layer; and a second polymer layer, the second polymer layer being located on a side of the metal layer facing away from the first polymer layer; and in a direction from the first polymer layer to the second polymer layer, the current collector having with a number of through-holes that penetrate the current collector.

In the present disclosure, the through-holes penetrate the current collector, which helps the current collector be effectively infiltrated by an electrolyte solution, to improve electrochemical consistency inside the current collector. Moreover, the arrangement of the through-holes increases a specific surface area and internal spaces of the current collector, these internal spaces accommodate lithium precipitated in a charging/discharging process. In addition, the metal layer is disposed in the middle, and lithium may be induced to be deposited on the internal metal layer, to inhibit generation of lithium crystal dendrite, avoid generation of dead lithium (inactive lithium), and reduce interface impedance and loss of active lithium. The current collector provided in the present disclosure may be directly used as a negative electrode, to improve electrochemical performance and safety of the negative electrode.

The current collector further includes a conductive layer, where the conductive layer is disposed on an inner side wall of the through-hole.

The through-holes are distributed in an array form.

An aperture size of the through-hole is less than or equal to 10 $\mu$m.

A thickness of the metal layer is less than or equal to 4 $\mu$m.

A thickness of the first polymer layer ranges from 11 $\mu$m to 26 $\mu$m.

A thickness of the second polymer layer ranges from 11 $\mu$m to 26 $\mu$m.

The current collector further includes a lithium-contained metal layer, and the lithium-contained metal layer is disposed in the metal layer.

A thickness of the lithium-contained metal layer ranges from 10 nm to 2 $\mu$m.

The current collector further includes a flame retardant layer, the flame retardant layer is disposed on a side of the first polymer layer facing away from the metal layer; and/or the flame retardant layer is disposed on a side of the second polymer layer facing away from the metal layer.

A thickness of the flame retardant layer ranges from 10 nm to 1 $\mu$m.

A lithium replenishment material is disposed in the first polymer layer, a weight percentage of the lithium replenishment material in the first polymer layer ranges from 0.1 wt% to 5 wt%, and the side of the first polymer layer facing away from the metal layer is insulating; and/or

a lithium replenishment material is disposed in the second polymer layer, a weight percentage of the lithium replenishment material in the second polymer layer ranges from 0.1 wt% to 5 wt%, and the side of the second polymer layer facing away from the metal layer is insulating; and
the lithium replenishment material includes at least one of Li-Mg, Li-Al, Li-Si, Li-Ag, Li-Au, Li-Sn, Li-In, and Li-Ge alloys.

According to a second aspect, the present disclosure further provides a preparation method for a current collector. The method includes:

laminating a first polymer film, a metal film, and a second polymer film sequentially, to form a first composite structure;
arranging a first protective film on a side surface of the first polymer film facing away from the metal film, and arranging a second protective film on a side surface of the second polymer film facing away from the metal film, to form a second composite structure;
forming a number of through-holes on the second composite structure, the through-holes penetrating two opposite surfaces of the second composite structure in a lamination direction; and
removing the first protective film and the second protective film, to obtain the current collector.

According to a third aspect, the present disclosure further provides a negative electrode. The negative electrode includes the current collector according to the first aspect or the current collector prepared with the preparation method according to the second aspect.

According to a fourth aspect, the present disclosure further provides an electrochemical energy storage device, including a positive electrode and the negative electrode according to the third aspect.

A porosity $\beta$ of the current collector, an areal capacity C of the positive electrode, a thickness d of the current collector in a lamination direction, and a capacity-thickness constant k meet a formula:

$$\beta \geq \frac{kC}{d} * 100\%$$

where $\beta \geq 50\%$, $C \geq 5$ mAh/cm$^2$, and $k = 5 \times 10^{-4}$ cm$^3$/mAh.

## BRIEF DESCRIPTION OF THE DRAWINGS

To describe the technical solutions in the implementations of the present disclosure more clearly, the following briefly introduces the accompanying drawings required for describing the implementations. Apparently, the accompanying drawings in the following description show merely some implementations of the present disclosure, and a person of ordinary skill in the art may still derive other drawings from these accompanying drawings without creative efforts.

FIG. 1 is a schematic top view of a current collector according to an implementation of the present disclosure;
FIG. 2 is a schematic cross-sectional view of FIG. 1 along a line I-I;
FIG. 3 is a schematic cross-sectional view of a current collector according to another implementation of the present disclosure;
FIG. 4 is a schematic cross-sectional view of a current collector according to another implementation of the present disclosure;
FIG. 5 is a schematic cross-sectional view of a current collector according to another implementation of the present disclosure;
FIG. 6 is a schematic cross-sectional view of a current collector according to another implementation of the present disclosure;
FIG. 7 is a schematic flowchart of preparing a current collector according to an implementation of the present disclosure; and
FIG. 8 is a schematic cross-sectional view of an electrochemical energy storage device according to an implementation of the present disclosure.

Description of reference numerals:
current collector-1, first polymer layer-11, metal layer-12, second polymer layer-13, through-hole-14, first sub-through-hole-141, second sub-through-hole-142, third sub-through-hole-143, conductive layer-15, lithium-contained metal layer-16, flame retardant layer-17, electrochemical energy storage device-2, positive electrode-21, negative electrode-22, separator film-23.

## DETAILED DESCRIPTION

The following clearly and completely describes the technical solutions in the implementations of the present disclosure with reference to the accompanying drawings in the implementations of the present disclosure. Apparently, the described implementations are only some of the implementations of the present disclosure rather than all of the implementations. All other implementations obtained by a person of ordinary skill in the art based on the implementations of the present disclosure without creative efforts shall fall within the protection scope of the present disclosure.

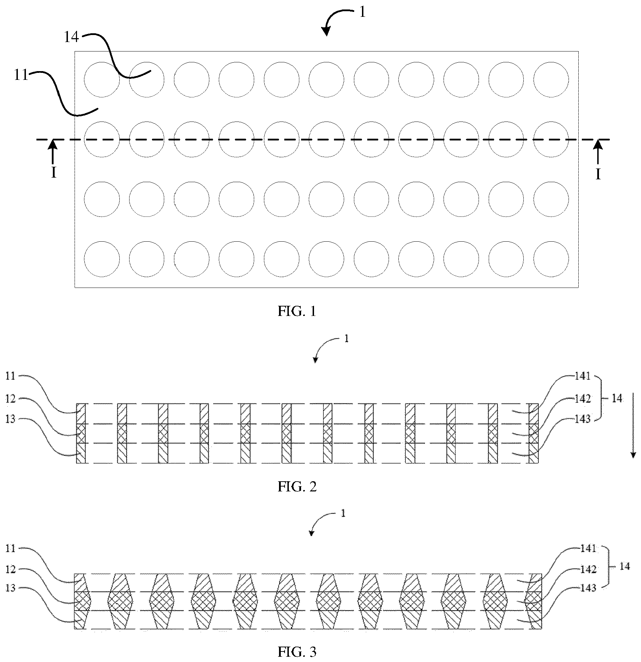

The present disclosure provides a current collector 1. Referring to FIG. 1 and FIG. 2 together, FIG. 1 is a schematic top view of a current collector according to an implementation of the present disclosure; and FIG. 2 is a schematic cross-sectional view of FIG. 1 along a line I-I. The current collector 1 includes a first polymer layer 11, a metal layer 12, and a second polymer layer 13. The first polymer layer 11, the metal layer 12, and the second polymer layer 13 are sequentially laminated. To be specific, the metal layer 12 is disposed on a side of the first polymer layer 11, and the second polymer layer 13 is disposed on a side of the metal layer 12 facing away from the first polymer layer 11. The current collector 1 has with a number of through-holes 14 that penetrate the current collector 1, that is to say, the current collected 1 has a number of through-holes 14 that penetrate two opposite surfaces of the current collector 1 in a lamination direction.

The current collector 1 provided in the present disclosure has the through-holes 14 that penetrate the current collector 1, which helps the current collector 1 be effectively infiltrated by an electrolyte solution, to improve electrochemical consistency inside the current collector 1. Moreover, the arrangement of the through-holes 14 increases a specific surface area and internal spaces of the current collector 1, these internal spaces accommodate lithium precipitated in a charging/discharging process, to inhibit generation of lithium crystal dendrite. Through the laminated structure, the metal layer 12 is disposed inside the current collector 1, and lithium may be induced to be deposited on the metal layer 12 inside the current collector 1, to inhibit generation of lithium crystal dendrite, avoid generation of dead lithium (inactive lithium), reduce interface impedance, avoid loss of active lithium, and improve electrochemical performance and use safety. Compared with a current collector with a single metal layer, by providing the first polymer layer 11 and the second polymer layer 13 in the current collector 1 provided in the present disclosure, deposition of lithium on a surface of the current collector 1 is avoided, and use performance and safety performance of the current collector are effectively ensured. Moreover, the arrangement of the through-holes 14 further improves the use performance of the current collector, and facilitates the application of the current collector.

It may be understood that because the current collector 1 has the through-holes 14, each of the first polymer layer 11, the metal layer 12, and the second polymer layer 13 is a porous layer structure.

In some examples of the present disclosure, a material of the first polymer layer 11 may be selected from at least one of polyethylene, polypropylene, polyimide, polytetrafluoroethylene, polyvinylidene fluoride, polyester, and polyacrylonitrile. This is not limited in the present disclosure. In some other examples, a material of the second polymer layer 13 may be selected from at least one of polyethylene, polypropylene, polyimide, polytetrafluoroethylene, polyvinylidene fluoride, polyester, and polyacrylonitrile. This is not limited in the present disclosure. In an example, a material of the first polymer layer 11 is the same as that of the second polymer layer 13. Specifically, the material of the first polymer layer 11 and the material of the second polymer layer 13 may be but are not limited to polyethylene terephthalate.

In some examples of the present disclosure, a thickness of the first polymer layer 11 ranges from 11 $\mu$m to 26 $\mu$m. To be specific, the thickness of the first polymer layer 11 ranges from 11 $\mu$m to 26 $\mu$m in the lamination direction. Further, a thickness of the first polymer layer 11 ranges from 15 $\mu$m to 23 $\mu$m. Specifically, the thickness of the first polymer layer 11 may be but is not limited to 11 $\mu$m, 13 $\mu$m, 15 $\mu$m, 18 $\mu$m, 21 $\mu$m, 25 $\mu$m, 26 $\mu$m, or the like. In some examples of the present disclosure, a thickness of the second polymer layer 13 ranges from 11 $\mu$m to 26 $\mu$m. To be specific, the thickness of the second polymer layer 13 ranges from 11 $\mu$m to 26 $\mu$m in the lamination direction. Further, a thickness of the second polymer layer 13 ranges from 15 $\mu$m to 23 $\mu$m. Specifically, the thickness of the second polymer layer 13 may be but is not limited to 12 $\mu$m, 14 $\mu$m, 17 $\mu$m, 23 $\mu$m, 24 $\mu$m, or the like. In an embodiment, a thickness of the first polymer layer 11 is the same as that of the second polymer layer 13.

In some examples of the present disclosure, at least one of the first polymer layer 11 and the second polymer layer 13 is provided with a lithium replenishment material. That is to say, the first polymer layer 11 and/or the second polymer layer 13 include the lithium replenishment material. Therefore, a supplement to consumed lithium is made in the charging/discharging process, to improve energy density and cycle life. Further, the lithium replenishment material includes at least one of Li-Mg, Li-Al, Li-Si, Li-Ag, Li-Au, Li-Sn, Li-In, and Li-Ge alloys. Therefore, a supplement to lithium may be effectively made. In an example, a weight percentage of the lithium replenishment material in the first polymer layer 11 ranges from 0.1 wt% to 5 wt%. In another example, a weight percentage of the lithium replenishment material in the second polymer layer 13 ranges from 0.1 wt% to 5 wt%. Use of the lithium replenishment material with the foregoing content not only facilitates a supplement to lithium, but also does not affect insulation performance of the first polymer layer 11 or the second polymer layer 13. Specifically, the weight percentage of the lithium replenishment material in the first polymer layer 11 may be but is not limited to 0.1 wt%, 0.5 wt%, 1 wt%, 2 wt%, 3 wt%, 4 wt%, or the like, and the weight percentage of the lithium replenishment material in the second polymer layer 13 may be but is not limited to 0.1 wt%, 0.5 wt%, 1 wt%, 2 wt%, 3 wt%, 4 wt%, or the like. In the present disclosure, when the first polymer layer 11 employs the lithium replenishment material with the foregoing content, an electronic conductivity of a side of the first polymer layer 11 facing away from the metal layer 12 is lower, thereby ensuring that metal lithium is not preferentially deposited on the surface of the first polymer layer 11, avoiding generation of lithium crystal dendrite and dead lithium, and further prolonging service life of a battery; and when the second polymer layer 13 includes the lithium replenishment material with the foregoing content, an electronic conductivity of a side of the second polymer layer 13 facing away from the metal layer 12 is lower, thereby ensuring that metal lithium is not preferentially deposited on the surface of the second polymer layer 13, avoiding generation of lithium crystal dendrite and dead lithium, and further prolonging the service life of the battery. That is to say, when the current collector is provided with the lithium replenishment material, the current collector may meet at least one of the following conditions:

(1) the electronic conductivity of the side of the first polymer layer facing away from the metal layer is lower than an electronic conductivity of a side of the first polymer layer facing the metal layer; and
(2) the electronic conductivity of the side of the second polymer layer facing away from the metal layer is lower than an electronic conductivity of a side of the second polymer layer facing the metal layer.

In an example, a lithium replenishment material is disposed in the first polymer layer 11, and the side of the first polymer layer 11 facing away from the metal layer 12 is insulating. In another example, a lithium replenishment material is disposed in the second polymer layer 13, and the side of the second polymer layer 13 facing away from the metal layer 12 is insulating.

In the present disclosure, the metal layer 12 disposed inside the current collector 1 ensures that lithium is preferentially deposited inside, avoids generation of lithium crystal dendrite, and facilitate an improvement in its electrochemical performance.

In some examples of the present disclosure, a material of the metal layer 12 includes at least one of copper, gold, silver, magnesium, zinc, titanium, and nickel, or stainless steel. Further, a material of the metal layer 12 includes at least one of a copper simple substance, a copper alloy, silver, titanium, and nickel, or stainless steel. Specifically, the metal layer 12 may be but is not limited to a copper foil, a copper alloy foil, a stainless steel foil, a silver foil, a titanium foil, or a nickel foil. In an example, the metal layer 12 is a copper foil or a copper alloy foil.

In some examples of the present disclosure, a thickness of the metal layer 12 is less than or equal to 4 $\mu$m. To be specific, a thickness of the metal layer 12 is less than or equal to 4 $\mu$m in the lamination direction. Further, a thickness of the metal layer 12 is less than or equal to 3 $\mu$m. Specifically, the thickness of the metal layer 12 may be but is not limited to 0.5 $\mu$m, 1 $\mu$m, 1.5 $\mu$m, 2 $\mu$m, 3 $\mu$m, 4 $\mu$m, or the like.

In some examples of the present disclosure, the thickness of the metal layer 12 is less than the thickness of the first polymer layer 11, and the thickness of the metal layer 12 is less than the thickness of the second polymer layer 13. Therefore, the percentage of the metal layer 12 in the whole current collector 1 is small, which can reduce weight and volume percentages of inactive components, and improve energy density of the current collector 1; and furthermore, the arrangement of the through-holes 14 does not excessively affect strength of the current collector, which facilitates an increase in the aperture size of the through-holes 14 and the porosity of the current collector 1. In an embodiment, the thickness of the metal layer 12 is less than or equal to 4 $\mu$m, the thickness of the first polymer layer 11 ranges from 11 $\mu$m to 26 $\mu$m, and the thickness of the second polymer layer 13 ranges from 11 $\mu$m to 26 $\mu$m.

In the present disclosure, the current collector 1 has a number of through-holes 14, and the through-holes 14 penetrate two opposite surfaces of the current collector 1 in a lamination direction. Referring to FIG. 2, in an implementation, a direction indicated by an arrow is a lamination direction.

In some examples, referring to FIG. 1 again, the through-holes 14 are distributed in an array form. The through-holes 14 are uniformly distributed in an array, to facilitate uniform deposition of lithium precipitated in a charging/discharging process, avoid protrusion of a part on which lithium is deposited excessively, and further improve use performance and safety performance.

In some examples, an aperture size of the through-hole 14 is less than or equal to 10 $\mu$m. Further, the aperture size of the through-hole 14 is less than 8 $\mu$m. Specifically, the aperture size of the through-hole 14 may be but is not limited to 3 $\mu$m, 4 $\mu$m, 5 $\mu$m, 6 $\mu$m, 8 $\mu$m, or the like. The arrangement of the through-holes 14 with the foregoing small aperture size further ensures that the electrolyte solution slowly passes through the through-holes 14, ensures that the current collector 1 is infiltrated in the electrolyte solution very well, and further improves consistency of electrochemical performance.

In some examples, as shown in FIG. 2, the first polymer layer 11 has first sub-through-holes 141, the metal layer 12 has second sub-through-holes 142, and the second polymer layer 13 has third sub-through-holes 143. A first sub-through-hole 141 is in communication with a third sub-through-hole 143 through a corresponding second sub-through-hole 142, to form a through-hole 14. Specifically, each of the first sub-through-hole 141, the second sub-through-hole 142, and the third sub-through-hole 143 has an accommodating space inside, so that when the current collector 1 is infiltrated in the electrolyte solution, the electrolyte solution can infiltrate into the current collector 1 more uniformly, that is, inner surfaces of the first sub-through-hole 141, the second sub-through-hole 142, and the third sub-through-hole 143.

In some examples, an aperture shape of the through-hole 14 in the current collector 1 includes at least one of a cylinder, a cuboid tube, a cubic tube, a trapezoidal cylinder, and a triangular pyramid. Specifically, as long as the communication between the first sub-through-hole 141 and the third sub-through-hole 143 through the corresponding second sub-through-hole 142 is not affected, the aperture shape of the through-hole 14 is not limited in the present disclosure. Specifically, a shape of a cross section of the through-hole 14 may be but is not limited to a polygon, a circle, an ellipse, an irregular shape, or the like, and a shape of a longitudinal section of the through-hole 14 may be but is not limited to a rectangle, a trapezoid, a quasi-trapezoid, a cone, a quasi-cone, an irregular shape, or the like. It should be particularly noted herein that, the cross section is a section of the through-hole along a plane on which the first or second polymer layer is disposed, and the longitudinal section is a section of the through-hole in a thickness direction of the current collector. In an example, the inner side wall of the through-hole 14 is in an oblique shape. In addition, the cross section of the through-hole 14 gradually increases in a direction from the metal layer 12 to the first polymer layer 11, and the cross section of the through-hole 14 gradually increases in a direction from the metal layer 12 to the second polymer layer 13. For example, the through-hole may have a structure shown in FIG. 3. That is to say, the section of the through-hole along the plane on which the first or second polymer layer is disposed gradually increases in the direction from the metal layer to the first polymer layer; or the section gradually increases in the direction from the metal layer to the second polymer layer. The foregoing section of the through-hole may meet one or two of the foregoing conditions. Therefore, the specific surface area of the through-hole 14 is increased, to facilitate deposition of lithium. Referring to FIG. 1 and FIG. 2 together, the aperture shape of the through-hole 14 is a cylinder. FIG. 3 is a schematic cross-sectional view of a current collector according to another implementation of the present disclosure. An aperture longitudinal section shape of the through-hole 14 is a quasi-trapezoid. In an example, when the through-hole 14 has a cross section that is circular and a longitudinal section that is quasi-trapezoidal, the through-hole 14 is in a shape of a trapezoidal cylinder. Further, an aperture longitudinal section shape of the through-hole 14 is a quasi-trapezoid, the quasi-trapezoid includes two trapezoids whose short sides intersect each other, and the cross section of the through-hole 14 gradually increases from the metal layer 12 to two ends of the current collector 1. In this implementation, as shown in FIG. 3, the cross sectional area of the second sub-through-hole 142 at the maximum size is less than or equal to the cross sectional area of the first sub-through-hole 141 and the third sub-through-hole 143 at the minimum size. It may be understood that through this arrangement, when the current collector 1 is provided with a conductive layer 15, it is easier for a conductive substance to be deposited on inner side walls of the first sub-through-hole 141, the second sub-through-hole 142, and the third sub-through-hole 143.

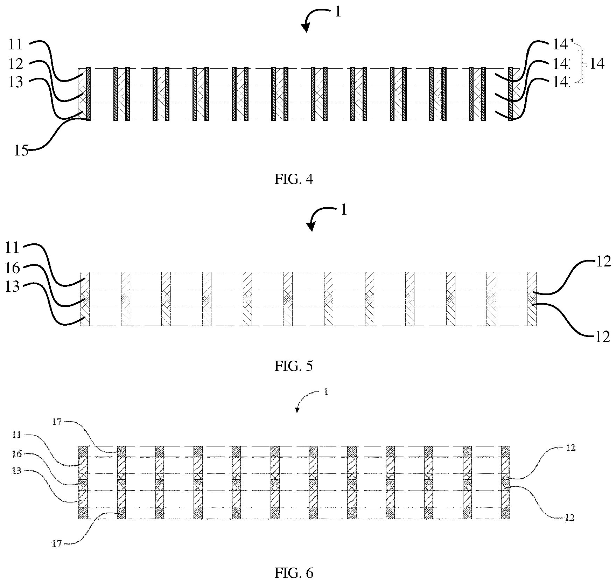

In some examples of the present disclosure, FIG. 4 is a schematic cross-sectional view of a current collector according to another implementation of the present disclosure. The current collector 1 further includes a conductive layer 15, where the conductive layer 15 is disposed on an inner side wall of the through-hole 14. It may be understood that the disposed conductive layer 15 does not block the through-hole 14, and the inside of the current collector 1 still has a hollow-out space. The conductive layer 15 is disposed in the through-hole 14, so that metal lithium may be deposited in the internal space of the current collector 1, and is prevented from being deposited on the surface of the current collector 1, to effectively reduce formation of dead lithium and improve electrochemical performance.

In some examples of the present disclosure, a conductive substance is deposited or impregnated on the inner side wall of the through-hole 14, to form the conductive layer 15. Further, the conductive substance is deposited on the inner side walls of the first sub-through-hole 141, the second sub-through-hole 142, and the third sub-through-hole 143, so that generation of by-products can be effectively reduced, thereby prolonging the service life of the current collector 1. In an embodiment, the material of the conductive layer 15 includes at least one of a metal material, a carbon material, and a conductive polymer material. Specifically, the material of the conductive layer 15 includes at least one of gold, silver, copper, nickel, iron, aluminum, germanium, tin, zinc, indium, vanadium, magnesium, cobalt, carbon, polyaniline, and polypyrrole.

FIG. 5 is a schematic cross-sectional view of a current collector according to another implementation of the present disclosure. The current collector 1 further includes a lithium-contained metal layer 16, and the lithium-contained metal layer 16 is disposed in the metal layer 12. By arranging the lithium-contained metal layer 16, a supplement to lithium consumed for a reaction between the electrolyte solution and the deposited lithium may be made, thereby improving energy density and cycle life. In an embodiment, a material of the lithium-contained metal layer 16 may include at least one of a lithium simple substance and a lithium alloy. Specifically, the lithium alloy includes at least one of Li-Ag, Li-Mg, Li-Zn, Li-Al, Li-Au, Li-Si, Li-Sn, and Li-Ge alloys. In an embodiment, a thickness of the lithium-contained metal layer 16 ranges from 10 nm to 2 $\mu$m. Further, a thickness of the lithium-contained metal layer 16 ranges from 100 nm to 1.5 $\mu$m. Furthermore, a thickness of the lithium-contained metal layer 16 ranges from 300 nm to 1000 nm. Specifically, a thickness of the lithium-contained metal layer 16 may be but is not limited to 100 nm, 400 nm, 500 nm, 800 nm, 1 $\mu$m,

1.5 $\mu$m, 1.8 $\mu$m, 2 $\mu$m, or the like. In an implementation, the lithium-contained metal layer 16 is disposed inside the metal layer 12. That is to say, the lithium-contained metal layer 16 is wrapped in the metal layer 12. In another implementation, the metal layer 12 includes a first porous metal layer and a second porous metal layer, and the first porous metal layer, the lithium-contained metal layer 16, and the second porous metal layer are sequentially laminated. It should be noted that, the through-holes 14 similarly penetrate the flame retardant layer and the lithium-contained metal layer 16.

FIG. 6 is a schematic cross-sectional view of a current collector according to another implementation of the present disclosure. The current collector 1 further includes a flame retardant layer 17, and the flame retardant layer 17 is disposed in at least one of the following positions: the flame retardant layer 17 is disposed on a side of the first polymer layer 11 facing away from the metal layer 12, and the flame retardant layer 17 is disposed on a side of the second polymer layer 13 facing away from the metal layer 12. To be specific, the flame retardant layer 17 is disposed on a side of the first polymer layer 11 facing away from the metal layer 12, and/or the flame retardant layer 17 is disposed on a side of the second polymer layer 13 facing away from the metal layer 12. When the current collector 1 is used in an electrochemical energy storage device 2, metal lithium is highly active. As a result, when short-circuiting occurs, it is easy to burn the electrochemical energy storage device 2, to cause a safety accident. By arranging the flame retardant layer 17, at the beginning of short-circuiting, the flame retardant layer 17 may be heated and melted, and may block the holes and wrap metal lithium deposited in the through-holes 14, to prevent further contact between the metal lithium and the electrolyte solution from triggering thermal runaway. In addition, the melted flame retardant layer 17 may block the first sub-through-hole 141 in the adjacent first polymer layer 11 and/or the second sub-through-hole 142 in the adjacent second polymer layer 13, to isolate ion channels, eliminate the potential safety trouble, and improve use safety. Further, a melting point of the material of the flame retardant layer 17 ranges from 120°C to 155°C. Use of the flame retardant material with a low melting point better helps perform flame retardation. It should be noted that, when the flame retardant layer 17 is disposed on a side of the first polymer layer 11 facing away from the metal layer 12, and/or on a side of the second polymer layer 13 facing away from the metal layer 12, the through-holes 14 similarly penetrate the flame retardant layer 17. That is to say, a number of holes are also provided on the disposed flame retardant layer 17, and the holes are correspondingly in communication with the first sub-through-holes 141 and/or the third sub-through-holes 143. In this implementation, the material of the flame retardant layer 17 includes one or more of polyethylene wax, polypropylene wax, and polyethylene oxide wax. In this implementation, to not affect the whole thickness of the current collector 1, the flame retardant layer 17 has a small thickness, whose thickness range may be but is not limited to 10 nm to 1 $\mu$m, 50 nm to 0.8 $\mu$m, 100 nm to 0.7 $\mu$m, 200 nm to 0.5 $\mu$m, or the like.

A specific preparation method for the current collector 1 is not specially limited in the present disclosure. Next, an example is used to describe a preparation method for the current collector 1 provided in the present disclosure.

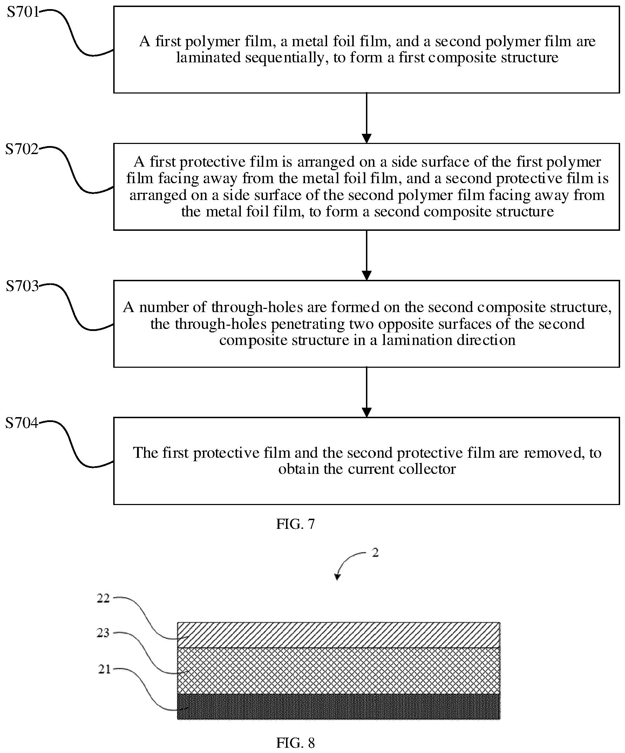

FIG. 7 is a schematic flowchart of preparing a current collector according to an implementation of the present disclosure. A preparation method for the current collector 1 includes: steps S701, S702, S703, and S704. Steps S701, S702, S703, and S704 are described in detail as follows:

S701: A first polymer film, a metal film, and a second polymer film are laminated sequentially, to form a first composite structure.

In an implementation, the laminating a first polymer film, a metal film, and a second polymer film sequentially includes: depositing metal on the first polymer film, to form the metal film; and then forming the second polymer film on the metal film through at least one of a liquid-phase coating technique, an atom deposition technique, and a melt extrusion and calendering technique. In another implementation, the laminating a first polymer film, a metal film, and a second polymer film sequentially includes: providing a substrate, depositing metal on the substrate, and performing exfoliation to form the metal film; and then forming the first polymer film and the second polymer film on two opposite surfaces of the metal film through at least one of a liquid-phase coating technique, an atom deposition technique, and a melt extrusion and calendering technique. Specifically, deposition may be performed through, but not limited to, magnetron sputtering, ion plating, vacuum evaporation, or the like. Specifically, technical parameters of deposition may be selected as required, and this is not limited in the present disclosure. In an embodiment, the laminating a first polymer film, a metal film, and a second polymer film sequentially includes: mounting the first polymer film into a vacuum magnetron sputtering coating machine, performing vacuumization with a vacuum pump to make a vacuum degree of a cavity reach $8 \times 10^{-2}$ Pa, then feeding some argon to perform adjustment to make the vacuum degree reach $2 \times 10^{-1}$ Pa, performing surface ion source cleaning on the first polymer film for a cleaning time ranging from 5 min to 15 min, and switching off an ion source power supply after the cleaning is completed; and starting a metal plating power supply to perform magnetron sputtering on the metal film, where the sputtering is performed on the metal film for a time ranging from 5 min to 100 min, to obtain the metal film whose thickness is less than or equal to 4 $\mu$m.

S702: A first protective film is disposed on a side surface of the first polymer film facing away from the metal film, and a second protective film is disposed on a side surface of the second polymer film facing away from the metal film, to form a second composite structure.

In this implementation, the protective film may be but is not limited to at least one of a transparent tape, an engineering paper, and a preservative film.

S703: A number of through-holes are formed on the second composite structure, the through-holes penetrating two opposite surfaces of the second composite structure in a lamination direction.

In this implementation, for the through-holes 14, a number of first sub-through-holes 141 are formed on the first polymer film, to form the first polymer layer 11, a number of second sub-through-holes 142 are formed on the metal film, to form the metal layer 12, and a number of third sub-through-holes 143 are formed on the second polymer film, to form the second polymer layer 13. In this implementation, a number of through-holes are formed on the second composite structure through ultrafast laser.

S704: The first protective film and the second protective film are removed, to obtain the current collector.

In this implementation, the preparation method for the current collector 1 further includes: depositing a conductive substance on the inner side wall of the through-hole 14, to form the conductive layer 15. Specifically, through a thermal evaporation sputtering, magnetron sputtering, or impregnation method, the conductive substance may be disposed on the inner side wall of the through-hole 14, for example, disposed on the inner side walls of the first sub-through-hole 141, the second sub-through-hole 142, and the third sub-through-hole 143, to form the conductive layer 15. It should be noted that, by controlling a time length for depositing the conductive substance, the conductive substance may be controlled to be partially deposited on the inner side walls of the first sub-through-hole 141, the second sub-through-hole 142, and the third sub-through-hole 143, to prevent the conductive substance from blocking the through-holes 14 due to an excessively long deposition time.

The present disclosure further provides a negative electrode 22. The negative electrode 22 includes the current collector 1 in any one of the foregoing implementations. Specifically, for the current collector 1, reference is made to the above description. Details are not described herein again. In the present disclosure, the current collector 1 may be directly as the negative electrode 22, and the negative electrode 22 does not need to be provided with a negative electrode active material layer. In this case, the negative electrode 22 is a lithium-free negative electrode, and when the current collector 1 provided in the present disclosure is used as the negative electrode 22, electrochemical performance and safety performance of the negative electrode 22 can be greatly improved.

The present disclosure further provides an electrochemical energy storage device 2. The electrochemical energy storage device 2 includes the negative electrode 22 described above. FIG. 8 is a schematic cross-sectional view of an electrochemical energy storage device according to an implementation of the present disclosure. The electrochemical energy storage device 2 includes a positive electrode 21 and a negative electrode 22. In an implementation, the current collector 1 is used as the negative electrode 22 of the electrochemical energy storage device 2.

Specifically, in this implementation, the electrochemical energy storage device 2 is a lithium-free negative electrode-lithium battery, that is, a negative electrode-free battery. In another possible implementation, the electrochemical energy storage device 2 may alternatively be another type of battery. This is not limited in the present disclosure.

In this implementation, a porosity $\beta$ of the current collector 1, an areal capacity C of the positive electrode 21, a thickness d of the current collector 1 in a lamination direction, and a capacity-thickness constant k meet a formula:

$$\beta \geq \frac{kC}{d} * 100\%$$

where $k = 5 \times 10^{-4}$ cm$^3$/mAh.

It should be noted that, usually, the electrochemical energy storage device 2 includes a positive electrode 21 and a negative electrode 22, and the current collector 1 is used as the negative electrode 22 of the electrochemical energy storage device 2. The porosity $\beta$ of the current collector 1 refers to a percentage of a total volume of the through-holes 14 in a total volume of the current collector 1, and the areal capacity of the positive electrode 21 refers to a total quantity of electrons that the positive electrode 21 of the electrochemical energy storage device 2 can release per unit surface area. By setting the porosity of the current collector 1 and the thickness of the current collector 1, the areal capacity of the positive electrode 21 can be increased, so that the whole energy density is increased. In an embodiment, $\beta \geq 50\%$, and C>5 mAh/cm$^2$. A high porosity can ensure that when the thickness of the current collector 1 is small, a space requirement for lithium deposition can be further met, to avoid volume expansion caused by unordered lithium deposition, and improve safety performance of the current collector 1. Further, $\beta \geq 60\%$, and C>6 mAh/cm$^2$.

In this implementation, the positive electrode 21 includes a positive electrode current collector and a positive electrode active material layer. In an embodiment, a material of the positive electrode active material layer includes one or more of LiFe$_a$Mn$_b$M$_c$PO$_4$, Li$_3$V$_2$(PO$_4$)$_3$, Li$_3$V$_3$(PO$_4$)$_3$, LiNi$_{0.5-d}$Mn$_{1.5-e}$N$_{d+e}$O$_4$, LiVPO$_4$F, Li$_{1+f}$L$_{1-g-h}$H$_g$R$_h$O$_2$, Li$_2$CuO$_2$, and Li$_5$FeO$_4$, where $0 \leq a \leq 1$, $0 \leq b \leq 1$, $0 \leq c \leq 1$, a+b+c=1, and M is at least one of Al, Mg, Ga, Ti, Cr, Cu, Zn, and Mo; -0.1<d<0.5, $0 \leq e \leq 1.5$, and N is at least one of Li, Co, Fe, Al, Mg, Ca, Ti, Mo, Cr, Cu, and Zn; and -0.1$\leq$f$\leq$0.2, $0 \leq g \leq 1$, $0 \leq h \leq 1$, $0 \leq g+h \leq 1.0$, and each of L, H, and R is independently selected from at least one of Li, Co, Mn, Ni, Fe, Al, Mg, Ga, Ti, Cr, Cu, Zn, Mo, F, I, S, and B. In a specific embodiment, a material of the positive electrode active material layer includes at least one of LiAl$_{0.05}$Co$_{0.15}$Ni$_{0.80}$O$_2$, LiNi$_{0.80}$Co$_{0.10}$Mn$_{0.10}$O$_2$, LiNi$_{0.90}$Co$_{0.05}$Mn$_{0.05}$O$_2$, LiNi$_{0.60}$Co$_{0.20}$Mn$_{0.20}$O$_2$,

$LiCoO_2$, $LiMn_2O_4$, $LiFePO_4$, $LiMnPO_4$, $LiNiPO_4$, $LiCoPO_4$, $LiNi_{0.5}Mn_{1.5}O_4$, and $Li_3V_3(PO_4)_3$. In another specific embodiment, a material of the positive electrode active material layer includes at least one of lithium sulfide, lithium-inserted state $V_2O_5$, lithium-inserted state $MnO_2$, lithium-inserted state $TiS_2$, and lithium-inserted state $FeS_2$.

In this implementation, the electrochemical energy storage device 2 further includes a separator film 23 disposed between the positive electrode 21 and the negative electrode 22. The separator film 23 is configured to separate the positive electrode 21 and the negative electrode 22 of the electrochemical energy storage device 2, and a material of the separator film 23 is not limited in the present disclosure.

Because the electrochemical energy storage device 2 provided in this implementation of the present disclosure includes the foregoing current collector 1, the current collector enables the electrochemical energy storage device 2 to have large energy density, high charging/discharging capacity, insusceptibility to generation of lithium crystal dendrite, high safety performance, and long cycle life.

The implementations of the present disclosure are further described below through a number of embodiments.

Embodiment 1

A preparation method for a current collector includes:

(1) A first PET film (whose thickness is 18 μm) is provided in a vacuum magnetron sputtering coating machine, vacuumization is performed with a vacuum pump to make a vacuum degree of a cavity reach $8\times10^{-2}$ Pa, then some argon is fed to perform adjustment to make the vacuum degree reach $2\times10^{-1}$ Pa, surface ion source cleaning is performed on the first PET film for a cleaning time of 5 min, and an ion source power supply is switched off after the cleaning is completed; and then a copper plating power supply is started to perform a process of magnetron sputtering on plated metal copper, where the sputtering is performed on the plated metal copper for a time of 30 min, to obtain a metal copper foil whose thickness is 4 μm.

(2) A second PET film whose thickness is about 18 μm is calendered and prepared on a surface of the metal copper foil facing away from the first PET film with a melt extrusion calender (whose melting temperature is set to 300°C).

(3) A transparent tape protective film is disposed on a surface of each of the first PET film and the second PET film facing away from the metal copper foil, to obtain a composite structure; and a number of through-holes disposed in an array are formed on the composite structure through ultrafast laser (whose wavelength is 355 nm), the through-holes penetrate two opposite surfaces of the composite structure in a lamination direction, sizes of the through-holes are 10 μm, and a porous composite structure is obtained.

(4) The porous composite structure is transferred into a thermal evaporation instrument, the vacuum pump performs vacuumization to make the vacuum degree of the cavity reach $4\times10^{-1}$ Pa, the temperature is increased to 400°C, metal magnesium is deposited on inner wall surfaces of the through-holes, the deposition time lasts for 10 min; after the temperature is decreased to 100°C, the vacuumization is closed, and the porous composite structure is taken out and exfoliated to remove the transparent tape protective film to obtain a current collector Z1 whose porosity is 75%.

Embodiment 2

A preparation method for a current collector includes:
Approximately the same as Embodiment 1. A difference lies in that the first PET film and the second PET film have a thickness of 16.75 μm, the porosity and the size of the through-holes are 80% and 10 μm respectively, and a current collector Z2 is obtained.

Embodiment 3

A preparation method for a current collector includes:
Approximately the same as Embodiment 1. A difference lies in that the first PET film and the second PET film have a thickness of 28 μm, the porosity and the aperture size of the through-holes are 50% and 5 μm respectively, and a current collector Z3 is obtained.

Embodiment 4

A preparation method for a current collector includes:
Approximately the same as Embodiment 1. A difference lies in that the transparent tape protective film is directly removed after step (3) without performing step (4), and a current collector Z4 is obtained.

Embodiment 5

A preparation method for a current collector includes:
Approximately the same as Embodiment 1. A difference lies in that a number of through-holes are disposed in an unordered manner, and a current collector Z5 is obtained.

Embodiment 6

A preparation method for a current collector includes:
Approximately the same as Embodiment 1. A difference lies in that the metal copper foil has a thickness of 8 $\mu$m, the first PET film and the second PET film have a thickness of 16 $\mu$m, and a current collector Z6 is obtained.

Embodiment 7

A preparation method for a current collector includes:
Approximately the same as Embodiment 1. A difference lies in that the porosity and the aperture size of the through-holes are 50% and 10 $\mu$m respectively, and a current collector Z7 is obtained.

Embodiment 8

A preparation method for a current collector includes:
Approximately the same as Embodiment 1. A difference lies in that a surface of the first PET film facing away from the metal copper foil and a surface of the second PET film facing away from the metal copper foil are each provided with a porous polypropylene wax flame retardant layer, and a current collector Z8 is obtained.

Embodiment 9

A preparation method for a current collector includes:
Approximately the same as Embodiment 1. A difference lies in that magnesium aluminum alloy particles are disposed in the second PET film, a weight percentage of the magnesium aluminum alloy particles in the second PET film is 1 wt%, the surface of the second PET film is insulating, and a current collector Z9 is obtained.

Embodiment 10

A preparation method for a current collector includes:
Approximately the same as Embodiment 1. A difference lies in that the porosity and the aperture size of the through-holes are 80% and 10 $\mu$m respectively, and a current collector Z10 is obtained.

Comparative Example 1

Approximately the same as Embodiment 1. A difference lies in that in step (4), exfoliation is first performed to remove the transparent tape protective film on the surface and then the same evaporation process is performed, and a current collector DZ1 is obtained.

Comparative Example 2

Approximately the same as Embodiment 1. A difference lies in that a treatment time for each time of laser pore-forming in step (3) is halved, a porous structure in an array of non-through-holes is obtained, and the aperture size of the through-holes are 10 $\mu$m. Because of the non-through-holes, the porosity is 67.5%, and a current collector DZ2 is obtained.

To describe electrochemical performance of the current collector provided in the implementations of the present disclosure, the following test steps are performed:

(1) Preparation and electrochemical cycle test of a full battery:

① 49 g of positive electrode active material (LiFePO$_4$), 0.5 g of conductive agent (acetylene black), and 0.5 g of bonding agent (polyvinylidene fluoride, PVDF) are mixed uniformly in NMP with a vacuum mixer to form a stable and homogeneous slurry, where the stirring rate is 1000 rpm and the stirring time is 12 h; then an aluminum sheet of the current collector is coated with the obtained slurry, the areal density is controlled to be 220 g/m$^2$, then drying is performed at 80°C, and then a positive electrode plate with a size of 61x72 mm is tailored; and then drying is performed at 80°C, positive electrode plates are obtained through tableting of a roller, one plate is taken and tailored to a plate with a diameter of 13 mm to assemble a button cell to perform capacity calibration, and the calibrated capacity is 6 mAh/cm$^2$.

② The current collector Z or DZ obtained in the foregoing embodiments and the comparative examples is directly used as a negative electrode, and laminated with a separator film and a positive electrode tab separately, a battery is assembled, and 2.2 mL/Ah of electrolyte solution is dropped, where the electrolyte solution includes 1 wt% of LiNC$_3$ dissolved in dimethoxyethane (DME) with 4M LiFSI. Then, encapsulation is performed to obtain batteries S1-S10 and DS1-DS2 separately.

For each of S1-S10 and DS1-DS2, five batteries are taken, and on a secondary battery performance detection device, a charging/discharging cycle test is performed on each of the batteries at 0.2 C under a condition of 25°C. Steps are as follows: Standing lasts for 10 min; the battery is charged at a constant current of 0.2 C to 3.8 V, and charged at a constant voltage of 3.8 V to 0.05 C; Standing lasts for 10 min; the battery is discharged at 0.5 C to 2.7 V, which is one cycle. The steps are repeated. In a cycle process, when the capacity of the battery is lower than 80% of the initial discharging capacity, the cycle is terminated, a count of the cycle is the cycle life of the battery, an average is taken for each group, and the parameter, data of average initial discharging capacity of the battery, and a change rate of thicknesses of the battery before and after the cycle are shown in Table 1.

Table 1: Table of data of average initial discharging capacity of the battery and a change rate of thicknesses of the battery before and after the cycle

| Serial No. | Battery | Initial discharging capacity/mAh | Cycle count corresponding to 80% remaining capacity/ times | Battery thickness change rate at a cycle count corresponding to 80% remaining capacity/% |
|---|---|---|---|---|
| Embodiment 1 | S1 | 4053.5 | 126 | 15.5 |
| Embodiment 2 | S2 | 4054.7 | 130 | 15.8 |
| Embodiment 3 | S3 | 4045.9 | 115 | 19.2 |
| Embodiment 4 | S4 | 4033.1 | 100 | 20.6 |
| Embodiment 5 | S5 | 4037.3 | 105 | 20.1 |
| Embodiment 6 | S6 | 4051.5 | 119 | 17.3 |
| Embodiment 7 | S7 | 4010.1 | 89 | 23.6 |
| Embodiment 8 | S8 | 4029.6 | 116 | 19.8 |
| Embodiment 9 | S9 | 4052.3 | 135 | 16.8 |
| Embodiment 10 | S10 | 4053.8 | 132 | 15.2 |
| Comparative Example 1 | DS1 | 4036.2 | 65 | 30.7 |
| Comparative Example 2 | DS2 | 4029.7 | 76 | 28.9 |

(2) Impedance (EIS) test: For each of S1-S10 and DS1-DS2, two batteries are additionally taken and are filled with a liquid and then stand, an impedance test (with an amplitude of 5 mV and a frequency of 1000-0.01 Hz) is performed on each battery every 0.5 h, and experimental results are shown in Table 2.

Table 2: Table of battery impedance change ($\Omega$)

| | Battery | 0h | 0.5h | 1h | 2h | 3h | 4h | 5h | 6h | 7h | 8h |
|---|---|---|---|---|---|---|---|---|---|---|---|
| Embodiment 1 | S1 | 0.020 | 0.018 | 0.015 | 0.015 | 0.015 | 0.015 | 0.015 | 0.015 | 0.015 | 0.015 |
| Embodiment 2 | S2 | 0.019 | 0.018 | 0.015 | 0.015 | 0.015 | 0.015 | 0.015 | 0.015 | 0.015 | 0.015 |
| Embodiment 3 | S3 | 0.022 | 0.020 | 0.018 | 0.016 | 0.016 | 0.016 | 0.016 | 0.016 | 0.016 | 0.016 |
| Embodiment 4 | S4 | 0.025 | 0.022 | 0.020 | 0.020 | 0.020 | 0.020 | 0.020 | 0.020 | 0.020 | 0.020 |
| Embodiment 5 | S5 | 0.021 | 0.019 | 0.017 | 0.016 | 0.016 | 0.016 | 0.016 | 0.016 | 0.016 | 0.016 |
| Embodiment 6 | S6 | 0.020 | 0.018 | 0.015 | 0.015 | 0.015 | 0.015 | 0.015 | 0.015 | 0.015 | 0.015 |
| Embodiment 7 | S7 | 0.021 | 0.019 | 0.018 | 0.017 | 0.017 | 0.017 | 0.017 | 0.017 | 0.017 | 0.017 |
| Embodiment 8 | S8 | 0.021 | 0.018 | 0.017 | 0.016 | 0.016 | 0.016 | 0.016 | 0.016 | 0.016 | 0.016 |
| Embodiment 9 | S9 | 0.022 | 0.018 | 0.017 | 0.016 | 0.016 | 0.016 | 0.016 | 0.016 | 0.016 | 0.016 |
| Embodiment 10 | S10 | 0.019 | 0.017 | 0.015 | 0.015 | 0.015 | 0.015 | 0.015 | 0.015 | 0.015 | 0.015 |
| Comparative Example 1 | DS1 | 0.019 | 0.016 | 0.014 | 0.014 | 0.014 | 0.014 | 0.014 | 0.014 | 0.014 | 0.014 |
| Comparative Example 2 | DS2 | 0.030 | 0.028 | 0.027 | 0.026 | 0.026 | 0.025 | 0.025 | 0.024 | 0.024 | 0.024 |

(3) Energy density: Energy density evaluation is performed according to the experimental results in Table 1, and experimental results are shown in Table 3.

Specific energy = (initial discharging capacity * average initial discharging voltage)/battery weight;

volumetric energy density = ($n^{th}$ discharging capacity * average $n^{th}$ discharging voltage)/battery volume; and

the foregoing battery weight is cell weight excluding a housing, a cover plate, and components disposed on the housing and the cover plate; and the foregoing battery volume is cell volume excluding the housing, the cover plate, and the components disposed on the housing and the cover plate.

Table 3: Table of battery energy density evaluation

| Energy density | Specific energy Wh/kg | Volumetric energy density - Wh/L | | | | | |
|---|---|---|---|---|---|---|---|
| Cycle count | 0 | 0 | 20 | 50 | 100 | 150 | 200 |
| Embodiment 1 | 324.28 | 664.8 | 645.2 | 615.8 | 568.9 | 520.7 | 455.8 |
| Embodiment 2 | 328.48 | 671.8 | 651.1 | 621.6 | 592.5 | 532.8 | 475.2 |
| Embodiment 3 | 318.10 | 614.3 | 595.6 | 563.5 | 509.5 | 466.7 | 404.8 |
| Embodiment 4 | 324.27 | 661.5 | 637.2 | 596.3 | 530.2 | 485.6 | 400.5 |
| Embodiment 5 | 322.98 | 662.2 | 638.3 | 600.7 | 535.9 | 494.1 | 408.9 |
| Embodiment 6 | 308.69 | 664.5 | 642.6 | 609.5 | 553.8 | 503.8 | 438.7 |
| Embodiment 7 | 319.21 | 657.7 | 628.8 | 583.9 | 510.2 | 451.8 | 387.5 |
| Embodiment 8 | 319.18 | 660.9 | 639.5 | 603.8 | 550.7 | 498.6 | 428.5 |
| Embodiment 9 | 314.74 | 664.6 | 645.7 | 615.6 | 568.8 | 521.8 | 464.8 |
| Embodiment 10 | 325.57 | 665.1 | 646.3 | 617.2 | 570.5 | 522.3 | 457.9 |
| Comparative Example 1 | 314.25 | 662.0 | 620.8 | 558.9 | 452.5 | 343.2 | 220.7 |
| Comparative Example 2 | 312.23 | 660.9 | 625.9 | 571.8 | 485.3 | 405.6 | 308.8 |

(4) Metal lithium deposition experiment: For each of S1-S10 and DS1-DS2, two batteries are additionally taken to perform initial lithium deposition. At 25°C, the battery is charged to 3.8 V at the current density of 0.6 mA/cm$^2$, the battery is disassembled to observe lithium deposition positions, and experimental results are shown in Table 4.

Table 4: Table of lithium deposition positions of batteries

| | | 0.6 mA/cm$^2$ | |
| --- | --- | --- | --- |
| | | Shape | Thickness change/$\mu$m |
| | Embodiment 1 | Compact circle or ellipse, with no lithium deposited on the surface | 0.1 |
| | Embodiment 2 | Compact circle or ellipse, with no lithium deposited on the surface | 0.1 |
| | Embodiment 3 | Compact circle or ellipse, with no lithium deposited on the surface | 0.1 |
| | Embodiment 4 | Compact circle or ellipse, with no lithium deposited on the surface | 0.8 |
| | Embodiment 5 | Compact circle or ellipse, with no lithium deposited on the surface | 1.1 |
| | Embodiment 6 | Compact circle or ellipse, with no lithium deposited on the surface | 0.2 |
| | Embodiment 7 | Compact circle or ellipse, with a small amount of lithium deposited on the surface | 3.8 |
| | Embodiment 8 | Compact circle or ellipse, with no lithium deposited on the surface | 0.2 |
| | Embodiment 9 | Compact circle or ellipse, with no lithium deposited on the surface | 0.2 |
| | Embodiment 10 | Compact circle or ellipse, with no lithium deposited on the surface | 0.1 |
| | Comparative Example 1 | Compact circle or ellipse, with a large amount of lithium deposited on the surface | 10.5 |
| | Comparative Example 2 | Compact circle or ellipse, with a small amount of lithium deposited on the surface | 6.8 |

Understandably, it can be learned from the data in the above tables that the comparative examples have specific energy and volumetric energy density basically equivalent to those of the embodiments initially, but in the comparative examples, lithium metal is prone to be deposited on the surface of the negative electrode, capacity attenuation is fast after the cycle, battery volume expansion is large, and volumetric energy density is lowest at the later stage of the cycle. The battery provided in the embodiments of the present disclosure includes the current collector provided in the present disclosure, so that the battery has large energy density, high charging/discharging capacity, insusceptibility to generation of lithium crystal dendrite, high safety performance, and long cycle life.

The principles and implementations of the present disclosure are described through specific examples in this specification, and the descriptions of the implementations are only intended to help understand the core ideas of the present disclosure. Meanwhile, a person of ordinary skill in the art may make modifications to the specific implementations and application range according to the idea of the present disclosure. In conclusion, the content of this specification is not construed as a limit on the present disclosure.

**Claims**

1.   A current collector, comprising:

a first polymer layer;
a metal layer, the metal layer being disposed on a side of the first polymer layer; and
a second polymer layer, the second polymer layer being disposed on a side of the metal layer facing away from the first polymer layer; and
in a direction from the first polymer layer to the second polymer layer, the current collector having a plurality of through-holes that penetrate the current collector.

2.   The current collector according to claim 1, further comprising:
a conductive layer, wherein the conductive layer is disposed on an inner side wall of the through-hole.

3.   The current collector according to claim 1 or 2, wherein the plurality of through-holes are distributed in an array form.

4. The current collector according to claim 3, wherein an aperture size of the through-hole is less than or equal to 10 $\mu$m.

5. The current collector according to any one of claims 1 to 4, wherein the current collector further comprises a lithium-contained metal layer, and the lithium-contained metal layer is disposed in the metal layer.

6. The current collector according to claim 5, wherein a thickness of the lithium-contained metal layer ranges from 10 nm to 2 $\mu$m.

7. The current collector according to any one of claims 1 to 6, wherein the current collector further comprises a flame retardant layer, and the flame retardant layer is disposed in at least one of the following positions:

   on a side of the first polymer layer facing away from the metal layer; and
   on a side of the second polymer layer facing away from the metal layer.

8. The current collector according to claim 7, wherein a thickness of the flame retardant layer ranges from 10 nm to 1 $\mu$m.

9. The current collector according to any one of claims 1 to 8, wherein the current collector further comprises a lithium replenishment material, and the lithium replenishment material is disposed in at least one of the following positions:

   in the first polymer layer; and
   in the second polymer layer.

10. The current collector according to claim 9, wherein the lithium replenishment material meets at least one of the following conditions:

   a weight percentage of the lithium replenishment material in the first polymer layer ranges from 0.1 wt% to 5 wt%; and
   a weight percentage of the lithium replenishment material in the second polymer layer ranges from 0.1 wt% to 5 wt%; and
   the lithium replenishment material comprises at least one of Li-Mg, Li-Al, Li-Si, Li-Ag, Li-Au, Li-Sn, Li-In, and Li-Ge alloys.

11. The current collector according to claim 9 or 10, wherein the current collector meets at least one of the following conditions:

   an electronic conductivity of a side of the first polymer layer facing away from the metal layer is lower than an electronic conductivity of a side of the first polymer layer facing the metal layer; and
   an electronic conductivity of the side of the second polymer layer facing away from the metal layer is lower than an electronic conductivity of a side of the second polymer layer facing the metal layer.

12. The current collector according to any one of claims 9 to 11, wherein the current collector meets at least one of the following conditions:

   a side of the first polymer layer facing away from the metal layer is insulating; and
   a side of the second polymer layer facing away from the metal layer is insulating.

13. The current collector according to any one of claims 1 to 12, wherein the current collector meets at least one of the following conditions:

   a thickness of the metal layer is less than or equal to 4 $\mu$m;
   a thickness of the first polymer layer ranges from 11 $\mu$m to 26 $\mu$m; and
   a thickness of the second polymer layer ranges from 11 $\mu$m to 26 $\mu$m.

14. The current collector according to any one of claims 1 to 13, wherein a material forming the metal layer comprises at least one of copper, gold, silver, magnesium, zinc, titanium, and nickel, or stainless steel.

15. The current collector according to any one of claims 1 to 14, wherein an aperture shape of the through-hole comprises at least one of a cylinder, a cuboid tube, a cubic tube, a trapezoidal cylinder, and a triangular pyramid.

16. The current collector according to claim 15, wherein a section of the through-hole along a plane on which the first or second polymer layer is disposed meets at least one of the following conditions:

the section gradually increases in a direction from the metal layer to the first polymer layer; and
the section gradually increases in a direction from the metal layer to the second polymer layer.

17. A preparation method for a current collector, comprising:

laminating a first polymer film, a metal film, and a second polymer film sequentially, to form a first composite structure;
arranging a first protective film on a side surface of the first polymer film layer facing away from the metal film, and arranging a second protective film on a side surface of the second polymer film facing away from the metal film, to form a second composite structure;
forming a plurality of through-holes on the second composite structure, the through-holes penetrating two opposite surfaces of the second composite structure in a lamination direction; and
removing the first protective film and the second protective film, to obtain the current collector.

18. An negative electrode, comprising the current collector according to any one of claims 1 to 16 or the current collector prepared with the method according to claim 17.

19. An electrochemical energy storage device, comprising a positive electrode and the negative electrode according to claim 18.

20. The electrochemical energy storage device according to claim 19, wherein a porosity $\beta$ of the current collector, an areal capacity C of the positive electrode, a thickness d of the current collector in a lamination direction, and a capacity-thickness constant k meet a formula:

$$\beta \geq \frac{kC}{d} * 100\%$$

wherein $\beta \geq 50\%$, C>5 mAh/cm$^2$, and k=5$\times$10$^{-4}$ cm$^3$/mAh.

FIG. 1

FIG. 2

FIG. 3

FIG. 4

FIG. 5

FIG. 6

S701 — A first polymer film, a metal foil film, and a second polymer film are laminated sequentially, to form a first composite structure

S702 — A first protective film is arranged on a side surface of the first polymer film facing away from the metal foil film, and a second protective film is arranged on a side surface of the second polymer film facing away from the metal foil film, to form a second composite structure

S703 — A number of through-holes are formed on the second composite structure, the through-holes penetrating two opposite surfaces of the second composite structure in a lamination direction

S704 — The first protective film and the second protective film are removed, to obtain the current collector

FIG. 7

FIG. 8

## INTERNATIONAL SEARCH REPORT

| International application No. |
|---|
| **PCT/CN2022/095943** |

**A.  CLASSIFICATION OF SUBJECT MATTER**

H01M 4/64(2006.01)i;  H01M 4/134(2010.01)i

According to International Patent Classification (IPC) or to both national classification and IPC

**B.  FIELDS SEARCHED**

Minimum documentation searched (classification system followed by classification symbols)

H01M

Documentation searched other than minimum documentation to the extent that such documents are included in the fields searched

Electronic data base consulted during the international search (name of data base and, where practicable, search terms used)

CNABS; CNTXT; VEN; ENTXT; CNKI: 锂离子电池, 集流体, 聚合物层, 金属层, 通孔, 补锂, 导电率, 绝缘, lithium ion battery, current collector, polymer layer, metal layer, through hole, lithium-replenishing, conductivity, insulation

**C.  DOCUMENTS CONSIDERED TO BE RELEVANT**

| Category* | Citation of document, with indication, where appropriate, of the relevant passages | Relevant to claim No. |
|---|---|---|
| X | CN 111430723 A (TIANJIN EV ENERGIES CO., LTD.) 17 July 2020 (2020-07-17) description, paragraphs 40-57 and 75, and figures 1-5 | 1-4, 7-10, 13-20 |
| Y | CN 111430723 A (TIANJIN EV ENERGIES CO., LTD.) 17 July 2020 (2020-07-17) description, paragraphs 40-57 and 75, and figures 1-5 | 5-6 |
| Y | CN 112164804 A (GUIZHOU MEILING POWER SUPPLY CO., LTD.) 01 January 2021 (2021-01-01) description, paragraphs [0005]-[0028] | 5-6 |
| X | CN 112599723 A (TIANJIN EV ENERGIES CO., LTD.) 02 April 2021 (2021-04-02) description, paragraphs 19-39 | 1-4, 7-10, 13-20 |
| Y | CN 112599723 A (TIANJIN EV ENERGIES CO., LTD.) 02 April 2021 (2021-04-02) description, paragraphs 19-39 | 5-6 |
| A | JP 2014096314 A (SEIKO EPSON CORP.) 22 May 2014 (2014-05-22) entire document | 1-20 |
| A | CN 109546084 A (NINGDE CONTEMPORARY AMPEREX TECHNOLOGY CO., LTD.) 29 March 2019 (2019-03-29) entire document | 1-20 |

☐ Further documents are listed in the continuation of Box C.      ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **08 August 2022** | **17 August 2022** |

| Name and mailing address of the ISA/CN | Authorized officer |
|---|---|
| **China National Intellectual Property Administration (ISA/ CN)** **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**
Information on patent family members

| International application No. |
| --- |
| **PCT/CN2022/095943** |

| Patent document<br>cited in search report | | | Publication date<br>(day/month/year) | Patent family member(s) | Publication date<br>(day/month/year) |
| --- | --- | --- | --- | --- | --- |
| CN | 111430723 | A | 17 July 2020 | None | |
| CN | 112164804 | A | 01 January 2021 | None | |
| CN | 112599723 | A | 02 April 2021 | None | |
| JP | 2014096314 | A | 22 May 2014 | None | |
| CN | 109546084 | A | 29 March 2019 | None | |

Form PCT/ISA/210 (patent family annex) (January 2015)